# EUROPÄISCHE PATENTSCHRIFT

(11) **EP 2 468 106 B1**
(45) Veröffentlichungstag und Bekanntmachung des Hinweises auf die Patenterteilung: **06.05.2015**
(21) Anmeldenummer: 10196558.0
(22) Anmeldetag: 22.12.2010
(51) Int. Cl.: A22C 11/02

(54) **Vorrichtung und Verfahren zum Verteilen von Restluft in pastösen Massen, insbesondere zur Herstellung von Würsten**
Device and method for distributing residual air in paste masses, in particular for producing sausages
Dispositif et procédé de répartition d'air résiduel dans des masses pâteuses, notamment pour la fabrication de saucisses

(43) Veröffentlichungstag der Anmeldung: 27.06.2012
(73) Patentinhaber: Albert Handtmann Maschinenfabrik GmbH & Co. KG, 88400 Biberach (DE)
(72) Erfinder: Weckenmann, Uwe, 88524, Uttenweiler (DE); Ried, Martin, 89584, Ehingen - Sontheim (DE)
(74) Vertreter: Grünecker Patent- und Rechtsanwälte PartG mbB

(56) Entgegenhaltungen:
- EP-A2- 2 198 717
- EP-A2- 2 218 331
- CH-A- 543 236
- DE-A1- 3 544 448
- US-A- 3 091 799

## Beschreibung

Die Erfindung betrifft eine Vorrichtung, ein Verfahren und die Verwendung einer solchen Vorrichtung zum Verteilen von Restluft in pastösen Massen, insbesondere zur Herstellung von Würsten.

Bei der Herstellung von Würsten werden mit Hilfe von Füllmaschinen pastöse Massen in Wursthüllen abgefüllt. Bei der Verarbeitung der pastösen Massen kommt es jedoch zu unerwünschten Luftansammlungen in der pastösen Masse.

Deshalb wurden bereits sogenannte Restluftverteiler oder Düsen im Auslass, d.h. in einem Bereich nach dem Förderwerk oder aber z.B. im Füllrohr verwendet (vgl. z. B. das Dokument CH 543 236 A.

Eine Feinstverteilung von Luftblasen kann jedoch nur im Bereich nach dem Förderwerk, d.h. auf der Druckseite erreicht werden, da hierfür entsprechende Druckunterschiede notwendig sind.

Es ist jedoch enorm schwierig, Luftverteilungssysteme, die nach dem Förderwerk eingesetzt werden, richtig auszuwählen. Ein bestimmter Verteilereinsatz, der die pastöse Masse umlenkt und durchmischt, um so die pastöse Masse zu homogenisieren ist jedoch nur für einen bestimmten Anwendungsbereich geeignet. Bei mehreren Produktwechseln sind daher verschiedene Verteilereinsätze notwendig. Die Verteilereinsätze müssen dann aufwändig ausgetauscht werden oder aber ein Verteilereinsatz muss ganz entfernt werden, wenn Produkte mit grobstückigen Einlagen, z.B. Bierschinken, hergestellt werden. Daher muss eine Fülllinie, die beispielsweise aus Vakuumfüller plus Vorsatzgeräte (z.B. Metalldetektor, Clipper etc.)besteht zum Einsetzen oder Auswechseln der Verteilereinsätze auseinandergerückt werden. Das Auswechseln der Verteilereinsätze bedeutet jedoch :- hohen Zeitaufwand, - funktionelle Probleme (z.B. Darmbremse am Clipper muss wieder eingestellt werden), - Fluchtungsfehler der einzelnen Geräte in Winkligkeit, und Höhe (ungewollte Verspannungen an Bauteilen) - eine längere Unterbrechung des Produktionsbetriebs sowie - körperliche Anstrengung bei schweren Vorsatzgeräten (z.B. Bewegen schwerer Clipmaschinen).

Die bekannten Verteilereinsätze wirken aufgrund einer Querschnittsverengung als Drossel und verursachen zunächst einen Druckaufbau im Auslauf des Förderwerks, d.h. vor dem Verteilereinsatz.

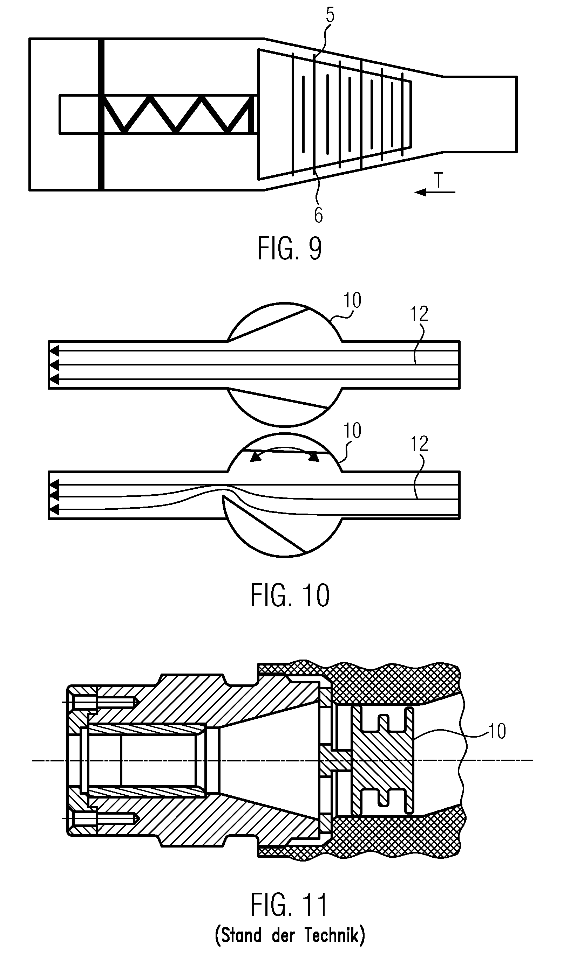

Fig. 11 zeigt einen entsprechenden Verteilereinsatz. Dieser Druckaufbau ändert sich jedoch in Abhängigkeit der Füllgeschwindigkeit, sowie weiterer Parameter, z. B. Konsistenz, Viskosität der Masse, Temperatur, Luftgehalt, etc.

Die Verteilereinsätze haben einen im eingebauten Zustand festen Durchflussquerschnitt, daher baut sich ein vom Fülltempo abhängiger Förderwerksdruck auf. Damit sich die Luft im Produkt gleichmäßig durch Verwendung des Verteilereinsatzes verteilen kann, muss dafür ein entsprechender Förderwerksdruck aufgebaut werden.

Bei zu geringem Druckaufbau wird die Luft nur unzureichend gleichmäßig verteilt. Bei zu hohem Druckaufbau wird das Füllgut sehr stark mechanisch beansprucht, was sich negativ auf die Produktqualität auswirkt.

Folglich muss der Verteilerquerschnitt zur Produktkonsistenz und zum Fülltempo passen. Dabei ist, wenn ein bestimmter Verteilertyp eingesetzt wird, stets nur ein Kompromiss möglich.

Hiervon ausgehend liegt der vorliegenden Erfindung die Aufgabe zugrunde, eine Vorrichtung und ein Verfahren zum Verteilen von Restluft in pastösen Massen bereitzustellen, die die Luft in der pastösen Masse möglichst homogen verteilen können, auch bei Viskositätsunterschieden der pastösen Masse und Fülltempoänderungen, ohne dass die Vorrichtung oder ein Teil der Vorrichtung ausgetauscht werden müssen.

Erfindungsgemäß wird diese Aufgabe durch die Merkmale der Ansprüche 1 und 10 gelöst.

Gemäß der Erfindung umfasst also die Vorrichtung ein Gehäuse, das einen Strömungskanal sowie einen Einlass und einen Auslass für die pastöse Masse aufweist. Der Strömungskanal ist so definiert, dass er sich von dem Einlass zum Auslass erstreckt. In dem Strömungskanal ist eine Verteilereinrichtung vorgesehen, über die die pastöse Masse umgelenkt und durchmischt werden kann. Durch das Umlenken und dadurch hervorgerufenes Durchmischen erfolgt eine Verteilung der Lufteinschlüsse. Die pastöse Masse hat dann am Auslass des Gehäuses eine homogenere Luftverteilung.

Gemäß der Erfindung ist nun die Verteilereinrichtung derart verstellbar, dass die Durchmischung einstellbar ist. Somit kann durch Verstellen der Verteilereinrichtung die Durchmischung an unterschiedliche Produktionsbedingungen wie unterschiedliche Viskosität des Produkts und/oder unterschiedliche Füllgeschwindigkeiten anpasst werden. Ein größerer Grad der Durchmischung bedeutet auch einen höheren Druckverlust im Strömungskanal und somit eine Erhöhung des Drucks vor der Vorrichtung. Ein geringerer Durchmischungsgrad bedeutet einen geringeren Druckverlust im Strömungskanal und somit einen geringeren Staudruck vor der Vorrichtung. Somit kann durch Einstellung der Verteilereinrichtung der Vordruck, der nötig ist, um Luft im Produkt gleichmäßig zu verteilen, eingestellt werden. Die Erfindung bringt dabei folgende Vorteile mit sich:
- optimaler Fülldruck und eine damit verbundene optimale Luftverteilung unabhängig von Fülltempo und Fließfähigkeit des Füllguts bei sich ändernden Parametern wie Fülltempo und Viskosität
- die Verteilereinrichtung muss nicht mehr ausgetauscht werden, um produktspezifische Anpassungen vorzunehmen, so dass das Verrücken schwerer Vorsatzgeräte und einer längerer Produktionsausfall entfällt,
- eine Beschädigung des Füllguts durch ungewollten hohen Druckaufbau kann wirksam verhindert werden,
- eine entsprechende Vorrichtung kann einfach im Bereich des Auslasses einer Füllmaschine integriert werden,
- es ist keine Vielzahl unterschiedlicher Verteilersysteme mehr notwendig, so dass Herstellungskosten gespart werden können. Die Einsätze können universell verwendet werden, das Handling und die Möglichkeit zur Reinigung wird verbessert.

Gemäß der vorliegenden Erfindung kann also die Stellung der eingebauten Verteilereinrichtung verändert werden, wodurch insbesondere der freie Strömungsquerschnitt im Strömungskanal zumindest abschnittsweise und/oder die Wirklänge des Abschnitts mit reduziertem Strömungsquerschnitt eingestellt werden kann.

Wird der freie Strömungsquerschnitt reduziert, ergibt sich mit abnehmendem Strömungsquerschnitt eine Erhöhung der Turbulenzen und somit der Durchmischung. Weist die Verteilereinrichtung eine bestimmte Länge auf, so ergibt sich in dem Strömungskanal ein Abschnitt mit reduziertem Strömungsquerschnitt entsprechend dieser Wirklänge. Diese Wirklänge ist nun durch Bewegung der Verteilungseinrichtung veränderbar. Somit kann durch Verändern des freien Strömungsquerschnitts und/oder der Wirklänge des Abschnitts mit reduziertem Strömungsquerschnitt die Durchmischung und somit die Drosselung eingestellt werden.

Es ist besonders vorteilhaft, wenn die Stellung der eingebauten Verteilereinrichtung in Abhängigkeit des Drucks p, der - in Strömungsrichtung betrachtet - vor der Verteilereinrichtung herrscht, und/oder der Viskosität und/oder der Konsistenz der pastösen Masse einstellbar oder aber regelbar ist. Das System kann selbstregelnd sein oder aber es kann hier eine Regeleinrichtung vorgesehen sein, die beispielsweise den Druck vor oder nach der Vorrichtung misst und dann die Stellung der Verteilereinrichtung entsprechend einem bestimmten Sollwert oder Sollwertbereich regelt. Jedoch kann auch zusätzlich oder alternativ die Viskosität bestimmt werden oder aber über eine entsprechende Eingabeeinrichtung ein entsprechender Wert eingegeben werden, wobei die Stellung der Verteilereinrichtung dann entsprechend eingestellt wird. Die passenden Stellungen wurden vorab experimentell ermittelt.

Es ist auch möglich, einen Wert für die Konsistenz in die Regeleinrichtung einzugeben. Ein entsprechender Wert entspricht dann einem bestimmten Füllgut mit einer entsprechenden Zusammensetzung und mit einem bestimmten Anteil und Größenbereich an Stücken. Solche Werte werden experimentell ermittelt und dann passende Stellungen der Verteilereinrichtung abgespeichert und mit Hilfe der Regeleinrichtung eingestellt. Vorteilhafterweise wird die Stellung der eingebauten Verteilereinrichtung so gewählt, dass der Druck vor der Vorrichtung im Wesentlichen konstant ist oder in einem konstanten Bereich liegt.

Gemäß der Erfingung umfasst die Verteilereinrichtung einen Kolben, insbesondere mit mehreren darauf angeordneten Schikanen, der zumindest in einem Teil des Strömungskanals entgegen und mit Strömungsrichtung beweglich angeordnet ist, so dass die Wirklänge des Kolbens in dem Strömungskanal einstellbar ist. In Abhängigkeit der Wirklänge L1 der Schikanen des Kolbens muss die pastöse Masse dann über unterschiedlich viele Schikanen fließen, so dass es in Abhängigkeit der Wirklänge L1 zu einer sich ändernden Durchmischung bzw. Drosselung kommt. Unter Schikanen versteht man hier Erhebungen auf dem Kolben, die den Strömungsweg der pastösen Masse stören.

Es ist besonders vorteilhaft, wenn die Verteilereinrichtung, insbesondere der Kolben aus dem Strömungskanal hinaus bewegbar ist. Die Verteilereinrichtung bewegt sich dann nur so weit wie nötig in den Strömungskanal, um den Fluss der pastösen Masse zu stören. Ganz besonders vorteilhaft ist hier, dass der Kolben bzw. die Verteilereinrichtung auch ganz zurückgezogen werden kann oder dann sogar entfernt werden kann, ohne dass die Vorrichtung ausgebaut werden muss. Dies ist insbesondere bei grobstückigem Füllgut vorteilhaft.

Die erfindungsgemäße Verteilereinrichtung und der Kolben ermöglichen auf einfache Weise eine stufenlose Verstellung des Grads der Durchmischung bzw. der Drosselwirkung.

Vorteilhafterweise sind die Verteilereinrichtung und der Kolben mit einem komprimierbaren Element, insbesondere einer Druckfeder verbunden, wodurch die Verteilereinrichtung bzw. der Kolben durch die pastöse Masse gegen die Federkraft verschiebbar ist. Eine entsprechende Anordnung ist sehr einfach zu realisieren und erlaubt darüber hinaus auch ein selbstregulierendes System, bei dem der Kolben bzw. die Verteilereinrichtung in Abhängigkeit des Drucks vor der Einrichtung bzw. vor dem Kolben bewegt wird. Somit ergibt sich ein einfaches selbstregulierendes System.

Es ist besonders vorteilhaft, wenn die Vorspannung des komprimierbaren Elements, insbesondere der Feder einstellbar ist. Die insbesondere stufenlose Verstellung der Federvorspannung dient zur optimalen Anpassung bei großen Viskositätsunterschieden, die durch unterschiedliches Füllgut (z.B. Leberwurst, Schinkenwurst) auftreten kann.

Es ist jedoch auch möglich, dass die Verteilereinrichtung bzw. der Kolben über einen Antrieb wie beispielsweise einen elektrischen Stellmotor oder über Druckluft bewegbar ist. Dann kann die Verteilereinrichtung bzw. der Kolben über eine Regeleinrichtung in eine exakte Stellung bewegt werden.

Wenn sich der Kolben zumindest abschnittsweise entgegen der Strömungsrichtung der pastösen Masse verjüngt und insbesondere zumindest abschnittsweise kegelförmig ausgebildet ist, dann kann bei einer entsprechenden komplementären Gehäuseform der Kolben in der Ruhestellung auch als Absperrventil dienen. Die kegelförmige Ausführung bringt darüber hinaus kürzere Regelwege mit sich.

Alternativ zu der Ausbildung der Verteilereinrichtung als Kolben kann die Verteilereinrichtung auch ein Mittel aus folgender Gruppe umfassen: Absperrschieber zur Querschnittsverkleinerung, Irisblende, Drehkolbenabsperrhahn oder Kugelhahn. Über diese Mittel kann in Abhängigkeit von deren Stellung der freie Strömungsquerschnitt im Strömungskanal geändert werden, indem sich diese Mittel unter einem Winkel zur Strömungsrichtung der pastösen Masse, insbesondere senkrecht zur Strömungsrichtung der pastösen Masse bewegen.

Gemäß der vorliegenden Erfindung kann also der Einlass der Vorrichtung mit dem Auslass eines Förderwerks einer Füllmaschine verbunden werden und der Auslass der Vorrichtung mit einem Vorsatzgerät, wie beispielsweise einem Metalldetektor oder einem Clipper oder aber einem Füllrohr. Somit kann die Vorrichtung zum Verteilen von Restluft in pastösen Massen am Auslass eines Förderwerks einer Füllmaschine verwendet werden. Alternativ kann die Vorrichtung einfach von Herstellern für Füllmaschinen integriert werden, unabhängig von den Herstellern der Vorsatzgeräte.

Die vorliegende Erfindung wird nachfolgend unter Bezugnahme folgender Figuren näher erläutert:
- Fig. 1: zeigt grob schematisch den Aufbau gemäß der vorliegenden Erfindung,
- Fig. 2: zeigt einen Querschnitt durch eine Ausführungsform gemäß der vorliegenden Erfindung, bei der die Verteilereinrichtung im Strömungskanal angeordnet ist,
- Fig. 3: zeigt das in Fig. 2 gezeigte Ausführungsbeispiel, wobei die Verteilereinrichtung aus dem Strömungskanal hinaus bewegt ist,
- Fig. 4: zeigt einen Schnitt durch eine Vorrichtung gemäß der vorliegenden Erfindung mit einem Kolben ohne Schikane,
- Fig. 5: zeigt eine perspektivische Darstellungen einer möglichen Ausführungsform eines Kolbens mit mehreren Schikanen,
- Fig. 6: zeigt einen Querschnitt durch eine erfindungsgemäße Vorrichtung gemäß einem weiteren Ausführungsbeispiel, das einen geregelten Antrieb aufweist,
- Fig. 7: zeigt eine Vorderansicht einer Verteilereinrichtung in Form einer Irisblende gemäß einem weiteren Ausführungsbeispiel der vorliegenden Erfindung,
- Fig. 8: zeigt schematisch ein weiteres Ausführungsbeispiel einer Verteilereinrichtung in Form eines Absperrschiebers,
- Fig. 9: zeigt schematisch einen Schnitt durch eine besondere Ausführungsform eines Kolbens mit mehreren darauf angeordneten Schikanen,
- Fig. 10: zeigt eine weitere Ausführungsform einer Verteilereinrichtung in Form eines Drehkolbenabsperrhahns gemäß der vorliegenden Erfindung,
- Fig. 11: zeigt einen Schnitt durch einen Auslassbereich einer Füllmaschine mit einem austauschbaren Verteilereinsatz gemäß dem Stand der Technik.

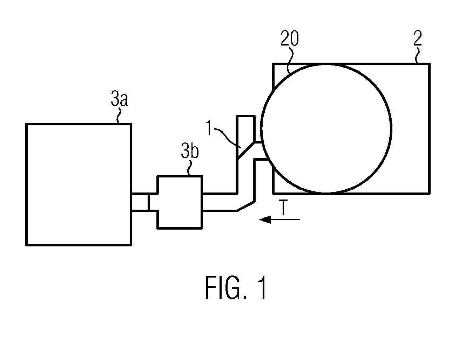

Fig. 1 zeigt den prinzipiellen Aufbau einer Fülllinie mit einer Vorrichtung 1 zum Verteilen von Restluft in pastöser Masse gemäß der vorliegenden Erfindung. Die Fülllinie weist dabei eine Füllmaschine 2, insbesondere einen Vakuumfüller auf, der, wie schematisch dargestellt, einen Fülltrichter 20 umfasst, über den Füllgut zu einem nicht dargestellten Förderwerk, beispielsweise in Form einer Flügelzellenpumpe, zugeführt wird. Über das Förderwerk wird die pastöse Masse in Transportrichtung T betrachtet, hinter dem Förderwerk der Vorrichtung 1 zum Verteilen von Restluft zugeführt. In der Vorrichtung 1 wird die pastöse Masse umgelenkt und dadurch durchmischt. Dabei kann sich die Restluft in der pastösen Masse gleichmäßig verteilen. Die pastöse Masse wird dann weiter in Transportrichtung T einem Vorsatzgerät 3 zugeführt. Ein solches Vorsatzgerät kann beispielsweise einen Metalldetektor 3b sowie einen Clippautomat 3a umfassen oder kann beispielsweise auch in Form eines Füllrohrs ausgebildet sein. Die Vorrichtung 1 ist dabei derart ausgebildet, dass der Grad der Durchmischung, d.h. der Grad der Umlenkung bzw. der Drosselung an unterschiedliche Prozessparameter anpassbar ist. Somit kann in der Vorrichtung unabhängig von der Fördergeschwindigkeit, der Viskosität oder der Konsistenz der pastösen Masse stets ein geeigneter Förderwerksdruckbereich vor der Vorrichtung 1 aufgebaut werden, der notwendig ist damit die pastöse Masse ausreichend homogenisiert wird und darüber hinaus die pastöse Masse keinen Schaden nimmt. Vorteilhafterweise liegt dieser Druck in einem Bereich von 1 bis 25 bar. Um den Druckverlust in der Vorrichtung 1, d.h. die Durchmischung entsprechend anzupassen ist die Stellung der Verteilereinrichtung 1 einstellbar, ohne dass die Verteilereinrichtung oder Teile davon ausgebaut werden müssen. Durch Verstellen der Verteilereinrichtung kann der freie Strömungsquerschnitt im Strömungskanal zumindest abschnittsweise und/oder die Wirklänge des Abschnitts mit reduziertem Strömungsquerschnitt eingestellt werden.

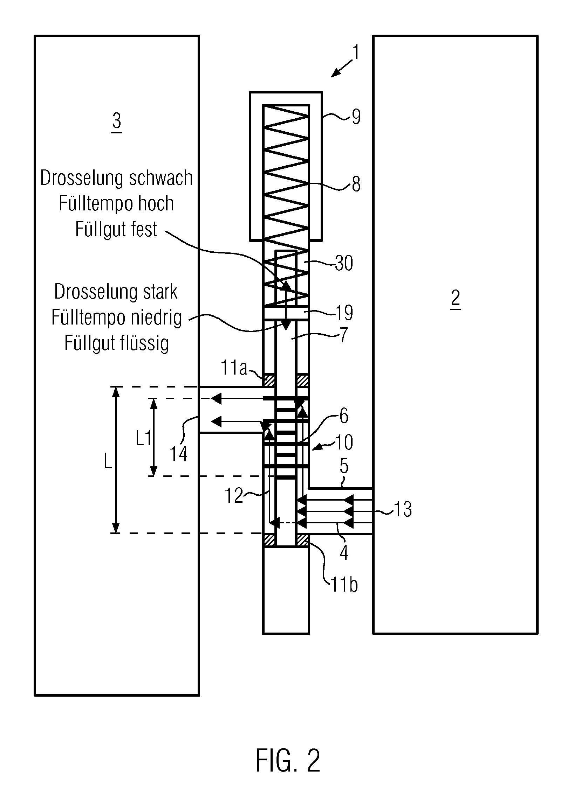

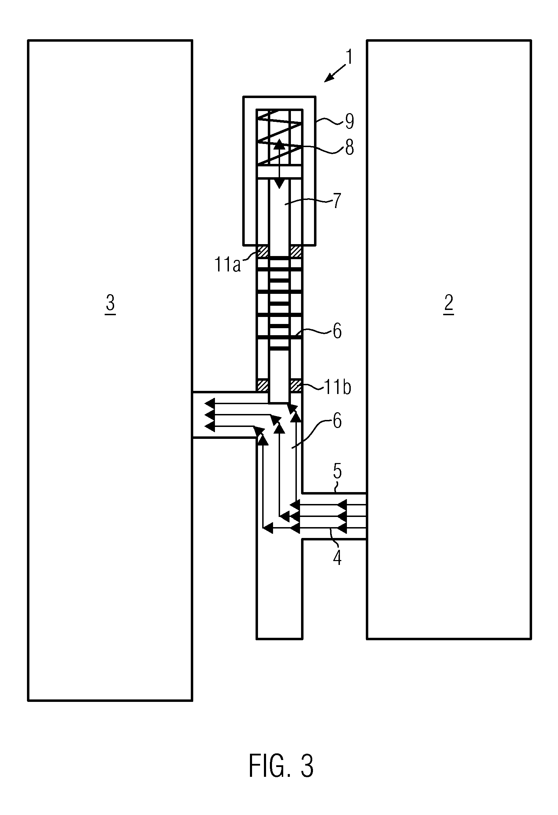

Fig. 2 und 3 zeigen ein bevorzugtes Ausführungsbeispiel gemäß der vorliegenden Erfindung.

Wie auch in Fig. 1 ist hier die Vorrichtung 1 zum Verteilen von Restluft zwischen Füllmaschine 2 und Vorsatzgerät 3 angeordnet. Die Vorrichtung 1 ist hier am Förderwerksauslass der Füllmaschine 2 angeordnet, vorteilhafterweise geschraubt. Die Vorrichtung 1 weist dabei ein Gehäuse 5 mit einem Einlass 13 und einem Auslass 14 auf, in dem ein Strömungskanal 12 für die pastöse Masse 4 angeordnet ist. Auf der Auslassseite 14 des Gehäuses 5 befindet sich dasselbe Gewinde wie am Förderwerksauslass der Füllmaschine 2, so dass ein Vorsatzgerät 3 anstatt am Förderwerksauslass einfach am Auslass der Vorrichtung 1 angeschlossen werden kann. Das Gehäuse 5 weist an seiner Einlassseite 13 ebenfalls ein Gewinde auf, mit dem es mit der Füllmaschine 2 verbunden werden kann. So kann die pastöse Masse von der Füllmaschine 2 in das Gehäuse 5 der Vorrichtung 1 gefördert werden. Eine entsprechende Anordnung ist für alle Ausführungsformen vorteilhaft.

In den Strömungskanal 12 ist die Verteilereinrichtung 10, wie durch den Pfeil dargestellt ist, hin- und herbeweglich angeordnet. Der Strömungskanal 12 ist so definiert, dass er sich vom Einlass 13 zum Auslass 14 erstreckt, wie durch die Pfeile dargestellt ist. In diesem Ausführungsbeispiel umfasst die Verteilereinrichtung ein Kolben 7, der mehrere darauf angeordnete Schikanen 6 aufweist. Die pastöse Masse muss im Strömungskanal 12 über oder durch die Schikanen 6 des Kolbens 7 fließen, was zu einer Durchmischung der pastösen Masse sowie einer Drosselung des Massestroms führt. Die Querschnittsverengung, die durch die Verteilereinrichtung 1 verursacht wird, bewirkt eine Druckerhöhung vor dem Kolben 7.

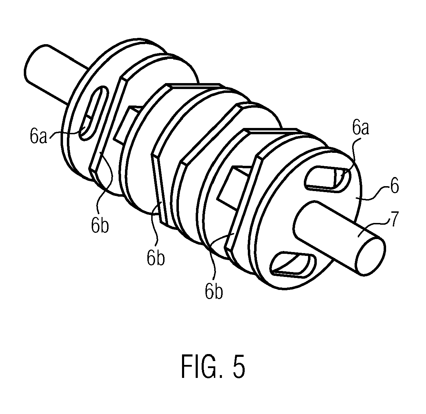

Fig. 5 zeigt eine perspektivische Darstellungen einer möglichen Ausführungsform eines entsprechenden Kolbens 7 mit Schikanen 6. Die Schikanen 6 sind dabei auf dem z.B. zylindrisch ausgebildeten Kolben 7 so ausgebildet, dass sie - in Radialrichtung betrachtet - über die Kolbenoberfläche vorstehen. Unterschiedliche von den Kolben hervorstehende Schikanen können unterschiedliche Formen und Abmessungen aufweisen. Ebenso ist es möglich, dass einige ringförmig um den Kolben 7 angeordnete Schikanen 6 Durchtrittsöffnungen 6a aufweisen, durch die die pastöse Masse in Transportrichtung geleitet werden kann. Es ist auch möglich, dass manche Schikanen zusammen mit dem Kolben einen Durchmesser aufweisen, der im wesentlichen dem Innendurchmesser des Gehäuses 5 entspricht derart, dass die Schikane 6 im Wesentlichen mit der Innenwand des Gehäuses 5 abschließt, jedoch darin noch beweglich ist, wobei ein Teil 6b der ringförmig um den Kolben 7 angeordneten Schikane ausgeschnitten, ist derart, dass das pastöse Gut gezwungen ist, in diesem Bereich über die Schikane zu fließen.

Somit verursacht die Verteilereinrichtung 1, d.h. hier der Kolben mit den Schikanen einen Abschnitt, in dem der Strömungsquerschnitt reduziert ist. Bei dem in Fig. 2 gezeigten Ausführungsbeispiel weist der gesamte Abschnitt mit reduziertem Strömungsquerschnitt die Länge L auf ( auch bereits der Kolben 7 bewirkt einen Querschnittsverjüngung). Die Wirklänge des Abschnitts des Kolbens mit Schikanen 6 wird mit L1 bezeichnet. Unter Wirklänge versteht man die Länge des entsprechenden Abschnitts, der im Strömungskanal angeordnet ist.

An dem Kolben 7 befinden sich ein oberer Dichtabschnitt 11a und ein unterer Dichtabschnitt 11 b, die als Gleitdichtung, insbesondere Dichtring, ausgebildet sind. Die Gleitdichtung 11a verhindert, dass pastöse Masse in einen Bereich 30 des Gehäuses, in dem z.B. die Druckfeder 8 angeordnet ist, fließt und begrenzt also den Strömungskanal 12. Die Dichtung 11b verhindert, dass die pastöse Masse in Richtung Verteilereinrichtung bzw. Schikanen fließt, wenn die Verteilereinrichtung aus dem Strömungskanal hinausbewegt ist. Der Kolben weist weiter eine Führung 19 auf, durch die der Kolben in dem z.B. rohrförmigen Gehäuse 5 entsprechend der Pfeilrichtung hin- und herbewegbar ist, d.h. entgegen und mit der Strömungsrichtung. Der Einlass 13 und der Auslass 14 befinden sich hier in einem Bereich seitlich der Bewegungsbahn des Kolbens 7. Am hinteren Ende des Kolbens 7, hier in einem Bereich hinter dem ringförmigen Vorsprung 19, befindet sich eine Druckfeder 8. Über die Druckfeder 8 wird der Kolben 7 definiert belastet. Die Federkraft der Feder 8 kann in Abhängigkeit bestimmter Prozessparameter insbesondere der Viskosität bzw. der Konsistenz der pastösen Masse und auch dem Fülltempo eingestellt werden. Die Vorspannung der Druckfeder 8 kann mit einer Vorspannmutter 9 eingestellt werden. Die einzelnen bevorzugten Parameter können dabei experimentell bestimmt werden. Somit kann der Kolben 7 durch die pastöse Masse 4 entgegen der Federkraft der Druckfeder 8 aus dem Strömungskanal 12 zumindest teilweise hinaus bewegt werden. Der Kolben 7 wird, wie durch den Pfeil dargestellt, um so mehr in Richtung Druckfeder 8 bewegt, je höher das Fülltempo (Volumenstrom) der pastösen Masse oder je zäher das Füllgut ist. Die Anzahl der Schikanen 6 (also die Wirklänge L1), an denen das Füllgut 4 vorbeiströmen muss, reduziert sich dadurch, so dass eine geringere Drosselwirkung und eine geringere Durchmischung entsteht. Bei langsamerem Fülltempo oder flüssigerem Füllgut bewegt sich der Kolben von der Druckfeder 8 weg, so dass die Länge L, d.h. die Wirklänge L des Kolbens und darüber hinaus auch die Länge L1 des Abschnitts mit Schikanen 6 vergrößert wird, so dass die pastöse Masse 4 dann wieder über mehr Schikanen fließen muss, was zu einer größeren Durchmischung und darüber hinaus auch zu einem größeren Strömungswiderstand und zu einer größeren Drosselung führt. Es entsteht ein selbstregelndes System, bei dem der Druck in einem Bereich vor der Verteilereinrichtung 1, d.h. hier vor dem Kolben 7 konstant gehalten werden kann unabhängig davon, welche Füllgeschwindigkeit gefahren wird oder welche Viskosität die pastöse Masse 4 aufweist. Dieser konstante Fülldruck ist jedoch wichtig für die erfolgreiche Homogenisierung von Lufteinschlüssen und ist darüber hinaus auch wichtig dafür, dass die pastöse Masse durch zu hohen Druck keinen Schaden nimmt. Die Federspannung ist dazu einstellbar. Dies Verteilereinrichtung 1, d.h. hier der Kolben 7 mit den Schikanen 6, kann auch ganz aus dem Strömungskanal 12 hinausgefahren werden, wenn beispielsweise der Druck vor der Verteilereinrichtung 1 sehr hoch ist. Dies kann beispielsweise der Fall sein, wenn das Fülltempo hoch ist und das Füllgut eine sehr hohe Viskosität aufweist, d.h. sehr fest ist. Es ist jedoch auch möglich, die Verteilereinrichtung manuell aus dem Strömungskanal entgegen der Federkraft der Feder 8 zu ziehen, wenn keine Drosselung gewünscht ist.

Somit kann die Drosselwirkung und damit die Durchmischung eingestellt werden ohne dass die Verteilereinrichtung 10 ausgetauscht werden muss.

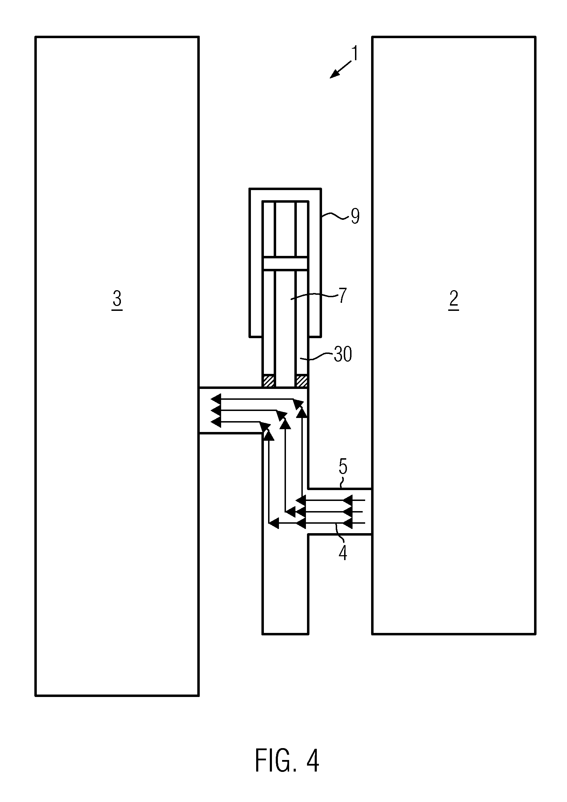

Wie in Fig. 4 dargestellt ist, kann bei Produkten bei Grobeinlagen, z.B. Bierschinken, ein Kolben 7 verwendet werden, der keine zusätzlichen Schikanen aufweist. Dabei kann beispielsweise der Schikanenkolben 7 durch den Kolben ohne Schikanen, wie in Fig. 4 dargestellt ist, ersetzt werden. Dieser Kolben dient dann dazu, den Hohlraum 30 im Gehäuse 5, der hinter dem Strömungskanal 12 liegt und in dem die Druckfeder angeordnet ist, abzudichten. Das Austauschen der Kolben 7 kann dabei in einfacher Weise erfolgen ohne dass die Vorrichtung 1 ausgebaut werden muss.

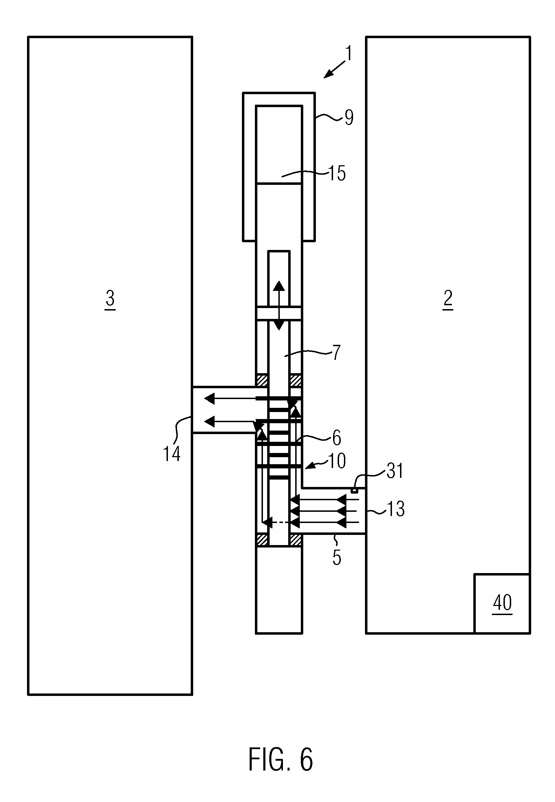

Fig. 6 zeigt eine weitere Ausführungsform gemäß der vorliegenden Erfindung. Hier wird die Verteilereinrichtung 10, d.h. hier der Kolben 7 mit den Schikanen 6 über einen Antrieb, wie durch die Pfeile dargestellt, bewegt. Der geregelte Antrieb kann dabei beispielsweise über einen nicht dargestellten Stellmotor oder Druckluft erfolgen. Bei der Regelung kann beispielsweise der Druck der pastösen Masse vor der Verteilereinrichtung 10 oder nach der Verteilereinrichtung über einen Drucksensor 31 erfasst werden.

Eine Regeleinrichtung 40 kann dann beispielsweise in Abhängigkeit des Drucks vor der Verteilereinrichtung 10, die Verteilereinrichtung in eine bestimmte Position verfahren, damit ein bestimmter konstanter Druck in einem Bereich vor der Verteilereinrichtung 10 eingestellt werden kann.

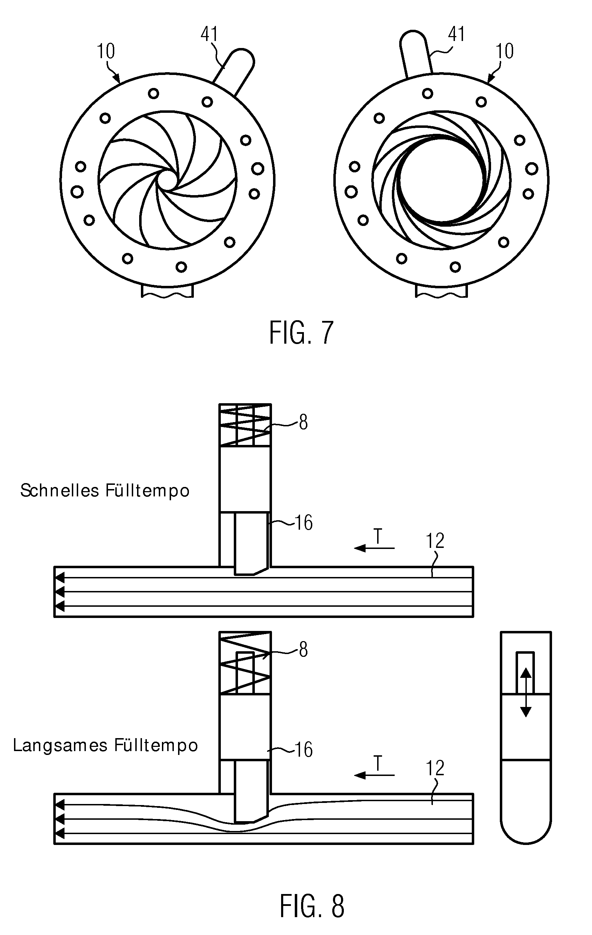

Fig. 7 zeigt eine weitere mögliche Ausführungsform der vorliegenden Erfindung, wobei die Verteilereinrichtung 10 als Irisblende ausgebildet sein kann, wobei über die Stellung der eingebauten Irisblende der freie Strömungsquerschnitt im Strömungskanal 12 einstellbar ist. Die Einstellung des Strömungsquerschnitts kann dabei wie auch bei den vorherigen Ausführungsbeispielen beschrieben, manuell erfolgen oder aber auch über eine Regeleinheit 40 über einen nicht dargestellten Antrieb. Zur manuellen Verstellung kann beispielsweise der Hebel 41 zum Verstellen der Irisblende hin- und herbewegt werden. Ist das Fülltempo hoch und/oder die pastöse Masse hochviskos, so wird eine schwache Drosselung und somit eine schwache Durchmischung gewählt, wobei wie im rechten Bereich der Fig. 7 dargestellt ist, dann die Irisblende eine relativ große Öffnung aufweist. Bei niedrigerem Fülltempo oder niedrig viskoser pastöser Masse ist die Drosselung stärker und die Durchmischung auf Grund der Turbulenzen größer, wobei dann die Öffnung einen kleineren Durchmesser aufweist (siehe linke Hälfte der Fig. 7). Das bedeutet, dass mit zunehmendem Fülltempo und/oder zunehmender Viskosität die Durchtrittsöffnung vergrößert wird. Auch hier ist kein Ausbauen der Verteilereinrichtung 10 notwendig.

Fig. 8 zeigt eine weitere mögliche Ausführungsform gemäß der vorliegenden Erfindung. Hier ist die Verteilereinrichtung 10 als Absperrschieber 16 ausgebildet, der quer zur Transportrichtung T der pastösen Masse in den Strömungskanal 12 bewegbar ist. Der Absperrschieber kann entweder zur Querschnittsverengung manuell betätigt werden oder über einen Antrieb angetrieben werden (Druckluft, Stellmotor etc.). Die Stellung des Absperrschiebers 16 kann entweder manuell betätigt werden oder über eine Regeleinrichtung 40, wie zuvor beschrieben, in Abhängigkeit des Drucks vor dem Absperrschieber, eingestellt werden. Auch eine Selbstregelung über eine Feder 8 ist möglich. Die pastöse Masse wirkt eine Druckkraft auf den Schieber aus, so dass diese entgegen der Federkraft der Feder 8 nach oben gedrückt wird, wie auch im Zusammenhang mit dem ersten Ausführungsbeispiel beschrieben wurde. Auch die Vorspannkraft der Feder 8 ist in diesem Ausführungsbeispiel z.B. über eine Vorspannmutter einstellbar.

Es ist ganz besonders vorteilhaft, wie in Fig. 9 gezeigt ist, wenn die Verteilereinrichtung 10, d.h. hier der Kolben 7 mit den Schikanen 6, zumindest abschnittsweise einen sich entgegen der Strömungsrichtung verjüngenden Querschnitt aufweist und insbesondere zumindest abschnittsweise kegelförmig ausgebildet ist. Das Gehäuse 5 weist dann eine entsprechend komplementäre Form auf. Der Schikanenkolben kann dann in Ruhestellung auch als Absperrventil dienen. Darüber hinaus ergeben sich kürzere Regelwege.

Fig. 10 zeigt eine weitere Ausführungsform gemäß der vorliegenden Erfindung. Hier ist die Verteilereinrichtung als Drehkolbenabsperrhahn oder nach dem Kugelhahnprinzip ausgebildet. Der Absperrhahn kann dabei manuell gesteuert eingestellt werden. Es ist jedoch auch möglich, den Absperrhahn elektrisch, pneumatisch oder hydraulisch zu verstellen. Dies kann gesteuert oder geregelt erfolgen. Bei einer Regelung kann, wie bei den vorherigen Ausführungsbeispielen, die Stellung der Verteilereinrichtung 10 in Abhängigkeit des Drucks vor der Verteilereinrichtung 10, d.h. hier vor dem Drehkolbenabsperrhahn geregelt werden.

Je nach Stellung des Absperrhahns wird der Durchflussquerschnitt verändert, was einen entsprechend höheren oder niedrigeren Druck im Förderwerkauslass bewirkt. Somit ergeben sich die gleichen Vorteile, wie sie im Zusammenhang mit den vorherigen Ausführungsbeispielen, beschrieben wurden.

Die besten Ergebnisse bezüglich der Homogenisierung der pastösen Masse ergeben sich mit den im Zusammenhang mit Fig. 2 und 3 gezeigten Ausführungsbeispielen, bei denen die Wirklänge L, d.h. die Gesamtwirklänge der Verteilereinrichtung im Strömungskanal 12 und insbesondere auch die Wirklänge L1 des Abschnitts mit Schikanen 6 im Strömungskanal 12 einstellbar ist.

Nachfolgend wird ein Betriebsverfahren für die erfindungsgemäße Vorrichtung insbesondere im Zusammenhang mit dem in Fig. 2 und 3 gezeigten Ausführungsbeispiel näher erläutert.

Pastöse Masse wird über das nicht dargestellte Förderwerk der Füllmaschine 2 in den Einlass 13 des Gehäuses 5 der Vorrichtung 1 zum Verteilen von Restluft eingeleitet. Für einen bestimmten Prozess mit einer bestimmten Füllgeschwindigkeit (Volumenstrom) und einer pastösen Masse mit einer bestimmten Viskosität und/oder Konsistenz wird die Druckfeder 8 auf eine experimentell ermittelte geeignete Vorspannung eingestellt. Während des Betriebs wird dann der Kolben 7 durch die pastöse Masse in eine bestimmte Position verschoben, so dass sich eine bestimmte Wirklänge L des Kolbens in dem Strömungskanal 12 und auch eine bestimmte Wirklänge L1 des Abschnitts mit den Schikanen 6 im Strömungskanal 12 ergibt. Auch Schwankungen in der Geschwindigkeit der pastösen Masse 4 können somit einfach kompensiert werden, so dass ein im Wesentlichen konstanter Druck vor der Verteilereinrichtung 10, d.h. hier vor dem Kolben 7, beibehalten werden kann. Die pastöse Masse 4 fließt in diesem Ausführungsbeispiel dabei über die verschiedenen Schikanen 6 oder durch sie hindurch, so dass Restluft in der pastösen Masse gleichmäßig verteilt werden kann. Die pastöse Masse mit verteilter Restluft kann dann über den Auslass 14 einem Vorsatzgerät 3 zugeführt werden. Bei sich ändernder Füllgeschwindigkeit ändert sich die Position bzw. die Stellung der Verteilereinrichtung, so dass sich eine ändernde Vermischung bzw. Drosselwirkung ergibt. Bei einem neuen Prozess mit einer sich stark ändernden Viskosität der pastösen Masse kann auch die Druckkraft der Feder verstellt werden.

Anstelle des selbstregulierenden Systems mit Hilfe der Druckfeder 8 kann auch, wie zuvor beschrieben, eine Regeleinrichtung 40 die Stellung der Verteilereinrichtung, über einen Antrieb beispielsweise in Abhängigkeit des Drucks vor der Verteilereinrichtung 10 verstellen. Somit kann dann die Wirklänge L, d.h. die gesamte Kolbenlänge im Strömungskanal 12 bzw. auch die Wirklänge L1 des Schikanenabschnitts eingestellt werden, um den Druck vor der Verteilereinrichtung 10 in einem weitgehend konstanten Bereich zu halten. Der Druck schwankt typischerweise in einem Bereich von +/- 30%, in Ausnahmefällen auch darüber. Bei stückigem Füllgut kann der Kolben auch ganz aus dem Strömungskanal 12 in einem Raum 30 des Gehäuses hinter dem Strömungskanal 12 gezogen werden, so dass keine Drosselung und Durchmischung mehr erfolgt.

## Patentansprüche

1. Vorrichtung (1) zum Verteilen von Restluft in pastösen Massen, insbesondere zur Herstellung von Würsten, mit
einem Gehäuse (5), das einen Strömungskanal sowie einen Einlass (13) und einen Auslass (14) für die pastöse Masse (4) aufweist, und
einer Verteilereinrichtung (10) zum Umlenken und Durchmischen der pastösen Masse (4) im Strömungskanal (12), wobei die eingebaute Verteilereinrichtung (10) derart verstellbar ist, dass die Durchmischung einstellbar ist, **dadurch gekennzeichnet, dass** die Verteilereinrichtung (10) einen Kolben (7) mit mehreren darauf angeordneten Schikanen (6) umfasst, der zumindest in einem Teil des Strömungskanals (12) entgegen und mit Strömungsrichtung beweglich ist, so dass die Wirklänge des Kolbens (7) im Strömungskanal (12) einstellbar ist.

2. Vorrichtung nach Anspruch 1, **dadurch gekennzeichnet, dass** die Stellung der eingebauten Verteilereinrichtung (10) derart veränderbar ist, dass der freie Strömungsquerschnitt im Strömungskanal (12) zumindest abschnittsweise und/oder die Wirklänge (L;L1) des Abschnitts mit reduziertem Strömungsquerschnitt einstellbar ist.

3. Vorrichtung nach Anspruch 1 oder 2, **dadurch gekennzeichnet, dass** die Stellung der eingebauten Verteilereinrichtung (10) in Abhängigkeit des Drucks, in Strömungsrichtung betrachtet vor der Verteilereinrichtung, und/oder in Abhängigkeit der Füllgeschwindigkeit, und / oder der Viskosität und / oder der Konsistenz der pastösen Masse (4) einstellbar oder regelbar ist.

4. Vorrichtung nach mindestens einem der Ansprüche 1 bis 3, **dadurch gekennzeichnet, dass** der Kolben (7) aus dem Strömungskanal (12) hinaus bewegbar ist.

5. Vorrichtung nach mindestens einem der Ansprüche 1 bis 4, **dadurch gekennzeichnet, dass** der Kolben (7) mit einer Druckfeder (8) verbunden ist, und der Kolben (7) durch die pastöse Masse gegen die Federkraft verschiebbar ist.

6. Vorrichtung nach Anspruch 5, **dadurch gekennzeichnet, dass** die Vorspannung der Feder (8) einstellbar ist.

7. Vorrichtung nach mindestens einem der Ansprüche 1 bis 6, **dadurch gekennzeichnet, dass** der Kolben (7), über einen Antrieb (15) bewegbar ist.

8. Vorrichtung nach mindestens einem der vorhergehenden Ansprüche, **dadurch gekennzeichnet, dass** der Kolben (7) sich zumindest abschnittsweise entgegen der Strömungsrichtung der pastösen Masse verjüngt und / oder insbesondere zumindest abschnittsweise kegelförmig ausgebildet ist.

9. Vorrichtung nach mindestens einem der Ansprüche 1 bis 8, **dadurch gekennzeichnet, dass** der Einlass (13) der Vorrichtung (1) mit dem Auslass eines Förderwerks einer Füllmaschine (2) verbindbar ist und der Auslass (14) mit einem Vorsatzgerät (3).

10. Verfahren zum Verteilen von Restluft in pastösen Massen, insbesondere zur Herstellung von Wurst, wobei
die pastöse Masse (4) durch eine Vorrichtung (1) geleitet und durch eine Verteilereinrichtung (10) umgelenkt und durchmischt wird, und die Durchmischung durch Verstellen der eingebauten Verteilereinrichtung (10) einstellbar ist, **dadurch gekennzeichnet, dass** die Verteilereinrichtung (10) einen Kolben (7) mit mehreren darauf angeordneten Schikanen (6) umfasst, der zumindest in einem Teil des Strömungskanals (12) entgegen und mit Strömungsrichtung bewegt wird, so dass die Wirklänge des Kolbens (7) im Strömungskanal (12) eingestellt wird.

11. Verfahren nach Anspruch 10, **dadurch gekennzeichnet, dass** die Stellung der eingebauten Verteilereinrichtung (10) verändert wird, wodurch insbesondere der freie Strömungsquerschnitt im Strömungskanal (12) zumindest abschnittsweise und/oder die Wirklänge des Abschnitts mit reduziertem Strömungsquerschnitt eingestellt wird.

12. Verfahren nach Anspruch 10 oder 11, **dadurch gekennzeichnet, dass** die Stellung der eingebauten Verteilereinrichtung (10) in Abhängigkeit des Drucks der pastösen Masse in Strömungsrichtung betrachtet vor der Verteilereinrichtung und/oder in Abhängigkeit der Füllgeschwindigkeit und oder der Viskosität und / oder der Konsistenz der pastösen Masse eingestellt oder geregelt wird, und insbesondere die Stellung der eingebauten Verteilereinrichtung derart geregelt wird, dass der Druck weitgehend konstant gehalten wird.

13. Verfahren nach mindestens einem der Ansprüche 10 bis 12, **dadurch gekennzeichnet, dass** die pastöse Masse aus einem Förderwerk einer Füllmaschine (2) in die Vorrichtung (1) geleitet wird, wobei die Restluft in der pastösen Masse gleichmäßig verteilt, die pastöse Masse anschließend einem Vorsatzgerät (3) zugeleitet wird und insbesondere über ein Füllrohr ausgestoßen wird.

14. Verwendung einer Vorrichtung nach mindestens einem der Ansprüche 1 bis 9 zum Verteilen von Restluft in der pastösen Masse am Auslass eines Förderwerks einer Füllmaschine (2).

## Claims

1. Device (1) for distributing residual air in pasty masses, in particular for the production of sausages, with
a housing (5) comprising a flow channel and an inlet (13) and an outlet (14) for the pasty mass (4), and
a distributor means (10) for deflecting and thoroughly mixing the pasty mass (4) in the flow channel (12), wherein the installed distributor means (10) can be adjusted such that mixing can be adjusted, **characterized in that** the distributor means (10) comprises a piston (7) with several baffles (6) arranged on it, which is movable at least in a portion of the flow channel (12) opposite to and with the direction of flow, so that the effective length of the piston (7) in the flow channel (12) can be adjusted.

2. Device according to claim 1, **characterized in that** the position of the installed distributor means (10) can be changed such that the free cross-section of flow in the flow channel (12) can be adjusted at least in sections and/or the effective length (L; L1) of the section with a reduced cross-section of flow can be adjusted.

3. Device according to claim 1 or 2, **characterized in that** the position of the installed distributor means (10) can be adjusted or controlled upstream of the distributor means, seen in the direction of flow, depending on the pressure, and/or depending on the filling speed and/or the viscosity and/or the consistency of the pasty mass (4).

4. Device according to at least one of claims 1 to 3, **characterized in that** the piston (7) can be moved out of the flow channel (12).

5. Device at least according to one of claims 1 to 4, **characterized in that** the piston (7) is connected to a pressure spring (8), and the piston (7) can be moved through the pasty mass against the spring force.

6. Device according to claim 5, **characterized in that** the pretension of the spring (8) can be adjusted.

7. Device according to at least one of claims 1 to 7, **characterized in that** the distributor means (10) and in particular the piston (7) can be moved by a drive (15).

8. Device at least according to one of the preceding claims, **characterized in that** the piston (7) tapers at least in sections against the direction of flow of the pasty mass, and/or that it is embodied conically in particular at least in sections.

9. Device according to at least one of claims 1 to 8, **characterized in that** the inlet (13) of the device (1) can be connected to the outlet of a conveyor system of a filling machine (2), and the outlet (14) can be connected to an attachment (3).

10. Method of distributing residual air in pasty masses, in particular for the production of sausage, wherein
the pasty mass (4) is conducted through a device (1) and deflected and mixed by a distributor means (10), and mixing can be adjusted by adjusting the installed distributor means (10), **characterized in that** the distributor means (10) comprises a piston (7) with several baffles (6) arranged on it, which is movable at least in a portion of the flow channel (12) opposite to and with the direction of flow, so that the effective length of the piston (7) in the flow channel (12) can be adjusted.

11. Method according to claim 10, **characterized in that** the position of the installed distributor means (10) can be changed, whereby in particular the free cross-section of flow in the flow channel (12) is adjusted at least in sections and/or the effective length (L; L1) of the section with a reduced cross-section of flow is adjusted.

12. Method according to claim 10 or 11, **characterized in that** the position of the installed distributor means (10) is adjusted or controlled depending on the pressure of the pasty mass upstream of the distributor means, seen in the direction of flow, and/or depending on the filling speed and or the viscosity and/or the consistency of the pasty mass, and in particular the position of the installed distributor means is controlled such that the pressure is kept largely constant.

13. Method according to at least one of claims 10 to 12, **characterized in that** the pasty mass is conducted from a conveyor system of a filling machine (2) into the device (1), wherein the residual air in the pasty mass is uniformly distributed, the pasty mass is subsequently fed to an attachment (3), and in particular ejected via a filling tube.

14. Use of a device according to at least one of claims 1 to 9 for distributing residual air in the pasty mass at the outlet of a conveyor system of a filling machine (2).

## Revendications

1. Dispositif (1) de distribution d'air résiduel dans des masses pâteuses, en particulier pour la fabrication de saucisses, avec
un boîtier (5) comportant un canal d'écoulement ainsi qu'une entrée (13) et une sortie (14) pour la masse pâteuse (4), et
un dispositif de distribution (10) pour diriger et mélanger la masse pâteuse (4) dans le canal d'écoulement (12), dans lequel le dispositif de distribution intégré (10) est ajustable de telle sorte que le mélange est réglage,
**caractérisé en ce que** le dispositif de distribution (10) comporte un piston (7) sur lequel sont agencées plusieurs chicanes (6), qui peut se déplacer en sens contraire à l'écoulement et dans le sens de celui-ci dans au moins une partie du canal d'écoulement (12), de telle sorte que la longueur utile du piston (7) dans le canal d'écoulement (12) est réglable.

2. Dispositif selon la revendication 1, **caractérisé en ce que** la position du dispositif de distribution intégré (10) peut être modifiée de telle sorte que la section d'écoulement libre du canal d'écoulement (12) peut être réglée au moins par segments, et/ou de telle sorte que la longueur utile (L ; L1) du segment à section d'écoulement réduite peut être réglée.

3. Dispositif selon la revendication 1 ou 2, **caractérisé en ce que** la position du dispositif de distribution intégré (10) peut être ajustée ou réglée en fonction de la pression, dans le sens de l'écoulement vu devant le dispositif de distribution, et/ou en fonction de la vitesse de remplissage, de la viscosité et/ou de la consistance de la masse pâteuse (4).

4. Dispositif selon au moins l'une des revendications 1 à 3, **caractérisé en ce que** le piston (7) peut être déplacé du canal d'écoulement (12) vers l'extérieur.

5. Dispositif selon au moins l'une des revendications 1 à 4, **caractérisé en ce que** le piston (7) est connecté à un ressort de compression (8), et **en ce que** le piston (7) peut être déplacé contre la force du ressort par la masse pâteuse.

6. Dispositif selon la revendication 5, **caractérisé en ce que** la précontrainte du ressort (8) est réglable.

7. Dispositif selon au moins l'une des revendications 1 à 6, **caractérisé en ce que** le piston (7) peut être déplacé à l'aide d'un entraînement (15).

8. Dispositif selon au moins l'une des revendications précédentes, **caractérisé en ce que** le piston (7) se rétrécit au moins par segments en sens contraire à l'écoulement de la masse pâteuse et/ou présente en particulier une forme conique au moins par segments.

9. Dispositif selon au moins l'une des revendications 1 à 8, **caractérisé en ce que** l'entrée (13) du dispositif (1) peut être connectée à la sortie du convoyeur d'alimentation d'une machine de remplissage (2), et la sortie (14) peut être connectée à un appareil frontal (3).

10. Procédé de distribution d'air résiduel dans des masses pâteuses, en particulier pour la fabrication de saucisses, dans lequel la masse pâteuse (4) est menée à travers un dispositif (1), et est dirigée et mélangée par un dispositif de distribution (10), et le mélange peut être réglé en ajustant le dispositif de distribution intégré (10), **caractérisé en ce que** le dispositif de distribution (10) comporte un piston (7) sur lequel sont agencées plusieurs chicanes (6), qui est déplacé en sens contraire à l'écoulement et dans le sens de celui-ci dans au moins une partie du canal d'écoulement (12), de manière à régler la longueur utile du piston (7) dans le canal d'écoulement (12).

11. Procédé selon la revendication 10, **caractérisé en ce que** la position du dispositif de distribution intégré (10) est changée, moyennant quoi est réglée en particulier la section d'écoulement libre dans le canal d'écoulement (12) au moins par segments, et/ou la longueur utile du segment à section d'écoulement réduite.

12. Procédé selon la revendication 10 ou 11, **caractérisé en ce que** la position du dispositif de distribution intégré (10) est ajustée ou réglée en fonction de la pression de la masse pâteuse dans le sens de l'écoulement vu devant le dispositif de distribution, et/ou en fonction de la vitesse de remplissage, de la viscosité et/ou de la consistance de la masse pâteuse, et en particulier la position du dispositif de distribution intégré est réglée de telle sorte que la pression est maintenue pratiquement constante.

13. Procédé selon au moins l'une des revendications 10 à 12, **caractérisé en ce que** la masse pâteuse est amenée dans le dispositif (1) à partir d'un convoyeur d'alimentation d'une machine de remplissage (2), moyennant quoi l'air résiduel est distribué uniformément dans la masse pâteuse, la masse pâteuse est amenée ensuite à un appareil frontal (3), et est en particulier expulsée via un tube de remplissage.

14. Utilisation d'un dispositif selon au moins l'une des revendications 1 à 9 pour la distribution d'air résiduel dans la masse pâteuse à la sortie d'un convoyeur d'alimentation d'une machine de remplissage (2).
